# NEUE EUROPÄISCHE PATENTSCHRIFT

(11) **EP 2 707 127 B2**
(45) Veröffentlichungstag und Bekanntmachung des Hinweises auf die Entscheidung über den Einspruch: **08.07.2020**
(45) Hinweis auf die Patenterteilung: 08.11.2017
(21) Anmeldenummer: 12732953.0
(22) Anmeldetag: 11.05.2012
(51) Int. Cl.: B01J 2/16, B01J 8/08, B01J 8/18

(54) **VORRICHTUNG ZUR KONTINUIERLICHEN BEHANDLUNG VON FESTSTOFFEN IN EINEM WIRBELSCHICHTAPPARAT**
DEVICE FOR THE CONTINUOUS TREATMENT OF SOLIDS IN A FLUIDISED BED APPARATUS
DISPOSITIF DE TRAITEMENT CONTINU DE MATIÈRES SOLIDES DANS UN APPAREIL À LIT FLUIDISÉ

(30) Priorität: 12.05.2011 DE 102011101866
(43) Veröffentlichungstag der Anmeldung: 19.03.2014
(73) Patentinhaber: Glatt Ingenieurtechnik GmbH, 99427 Weimar (DE)
(72) Erfinder: JACOB, Michael, 99425 Weimar (DE); BÖBER, Reinhard, 99425 Weimar (DE)
(74) Vertreter: Patentanwälte Magenbauer & Kollegen Partnerschaft mbB
(86) Internationale Anmeldenummer: PCT/DE2012/000486
(87) Internationale Veröffentlichungsnummer: WO 2012/152258

(56) Entgegenhaltungen:
- WO-A1-2006/067546
- DE-U1- 20 307 558

## Beschreibung

### Stand der Technik

Die Erfindung geht aus von einer Vorrichtung zur kontinuierlichen Behandlung von Feststoffen in einem Wirbelschichtapparat, beispielsweise zur Herstellung von frei fließenden Granulaten durch Sprühgranulieren, Agglomerieren, Verkapseln, Coaten oder Trocknen nach dem Oberbegriff des Anspruchs 1.

Zur Realisierung von Endprodukten mit definierten Partikelstrukturen werden Feststoffe in einer kontinuierlichen Fließbett-Wirbelschicht behandelt. Hierzu sind Vorrichtungen mit einer rechteckigen Apparategeometrie bekannt, in denen das zu behandelnde Gut durch eine ausreichende Fluidisierung im Bereich der Wirbelschicht von seinem Eintritt in den Prozessraum über die Länge der Vorrichtung bis zu seinem Austritt aus dem Prozessraum transportiert wird oder aufgrund einer Schräglage der Wirbelrinne selbständig fließt. Während der Zurücklegung dieses Weges wird das zu behandelnde Gut in der Wirbelschicht mit dem jeweiligen Fluidisierungsmedium in Kontakt gebracht.

Jeder kontinuierlich arbeitende Apparat hat ein charakteristisches Verweilzeitspektrum, das über die Geometrie des Prozessraumes und verfahrenstechnische Parameter beeinflussbar ist. Eine zusätzliche Möglichkeit der Einwirkung auf das Verweilzeitspektrum besteht in der Anordnung von Einbauten in dem Prozessraum. So ist es bekannt, Einbauten in Form von Einbauteilen anzuordnen, deren jeweilige untere Kante von der Oberfläche des Wirbelschichtbodens beabstandet ist und deren jeweilige obere Kante in einem Abstand über der Oberfläche der Wirbelschicht endet. Darüber hinaus wurde im Bereich unterhalb der Einbauteile ein größeres Öffnungsverhältnis der Gasdurchtrittsöffnungen des Wirbelschichtbodens als in den übrigen Bereichen des Wirbelschichtbodens gewählt. Die Einbauteile weisen einen runden, rechteckigen oder mehreckigen Querschnitt auf (DE 101 46 778 A1). Durch die gleichmäßig in Längsrichtung des Prozessraumes gerichtete Feststoffströmung wird mit derartigen Apparaten ein enges Verweilzeitspektrum für das zu behandelnde Gut erreicht. Ferner können in ein und demselben Prozessraum mehrere Prozessschritte, z. B. Granulation und Trocknung realisiert werden.

Der Nachteil von Vorrichtungen mit einer rechteckigen Apparategeometrie besteht allerdings darin, dass sie einen großen Platzbedarf erfordern und aufgrund ihrer Größe und der technisch erforderlichen Wandstärken eine hohe Masse besitzen und in ihrer Herstellung deshalb teuer sind. Wegen ihrer rechteckigen Geometrie lassen sie sich gar nicht oder nur mit einem besonders hohen Aufwand druck- bzw. druckstoßfest ausgelegen.

Dagegen kommen Vorrichtungen mit einer runden Apparategeometrie, bei denen der Prozessraum zylindrisch oder konisch ist, zwar mit einem geringeren Raumbedarf aus und lassen sich auch leichter druck- und/oder druckstoßfest auslegen, jedoch ist die Möglichkeit der Realisierung unterschiedlicher Prozessbedingungen eingeschränkt. So findet in dem Prozessraum zwar eine ideale Durchmischung der Feststoffteilchen statt, jedoch ist die Höhe der Wirbelschicht wegen der kleineren Anströmfläche im Vergleich zu einem rechteckigen Apparat üblicherweise deutlich größer, was wiederum ein verhältnismäßig breites Verweilzeitspektrum für das zu behandelnde Gut zur Folge hat und dadurch mitunter unterschiedliche Produkteigenschaften erzeugt werden. In der Regel ist in kontinuierlichen Apparaten mit einer runden Geometrie auch nur ein Prozessschritt möglich.

Bekannt ist ferner bei Vorrichtungen mit einer runden Apparategeometrie, durch eine kurzzeitige Erhöhung der Strömungsgeschwindigkeit des die Wirbelschicht erzeugenden bzw. aufrecht erhaltenden Gases, nämlich unmittelbar nach dem Passieren des Anströmbodens, Einfluss auf die Prozess-bedingungen zu nehmen. Hierzu ist bei einer Vorrichtung zur Durchführung katalytischer Reaktionen in einer Wirbelschicht ein gasundurchlässiger Kegel koaxial auf dem Anströmboden angeordnet, dessen Grundfläche den Mittelteil des Anströmbodens bedeckt, so dass eine ringförmige Prozessfläche verbleibt. Der Prozessraum besteht damit aus einem sich nach oben konisch erweiternden Ringraum (DE 1 052 367). Durch diese Gestaltung des Prozessraumes wird eine gleichmäßige Verteilung der festen Katalysatorteilchen in der Zone der Wirbelschicht erreicht und einer Agglomeration entgegengewirkt. Jedoch ist auch bei dieser Vorrichtung die Wirbelschicht verhältnismäßig hoch, so dass das Verweilzeitspektrum sehr groß ist und somit eine Anwendung dieser Vorrichtung zur kontinuierlichen Behandlung von Feststoffen nicht in Frage kommt.

Die Offenlegungsschrift WO 2006/067546 A1 offenbart einen Wirbelschichtapparat zur kontinuierlichen Behandlung von Feststoffpartikeln mit einem runden Prozessraum mit einem Feststoffeintritt und einem -austritt und einem der Innenkontur des Prozessraumes angepassten Anströmboden. Unterhalb des Anströmbodens ist zur Erzeugung und Aufrechterhaltung der Wirbelschicht ein Medieneintritt angeordnet. Zudem ist auf dem Anströmboden eine Trennwand angeordnet, die von der Innenwandung des Prozessraums radial nach innen in den Prozessraum hineinragt, so dass sich einerseits dicht an der Trennwand der Feststoffeintritt und andererseits dicht an der Trennwand der Feststoffaustritt befindet. Nachteilig hieran ist, dass zur Einstellung von definierten Verweilzeiten die Länge des Prozessraumes angepasst werden muss, was zum einen einen erheblichen Materialaufwand mit sich bringt und zum anderen sind nicht alle Verfahren ausführbar, da die Anpassung der Verweilzeit aufgrund der möglichen Längenanpassung des Prozessraumes begrenzt ist.

Die Gebrauchsmusterschrift DE 203 07 558 U1 offenbart einen Wirbelschichtapparat mit einem Produktbehälter und mit einem in dem Produktbehälter vorgesehenen Siebboden. der von unten mit Luft beaufschlagt ist, wobei der Produktbehälter rotationssymmetrisch ausgebildet ist, dass der Produktbehälter mindestens einen Einlass und mindestens einen Auslass aufweist und dass ein zentral angeordneter Körper vorgesehen ist, der zusammen mit dem rotationssymmetrischen Produktbehälter einen ringförmigen Produktfluss definiert.

Der Erfindung liegt daher die Aufgabe zugrunde, eine Vorrichtung zu entwickeln, bei welcher eine verbesserte Anpassung der Verweilzeit möglich ist und die Feststoffpartikel zu einer weiteren Behandlung für eine definierte Zeit zurückgehalten werden.

Die Aufgabe wird durch eine Vorrichtung zur kontinuierlichen Behandlung von Feststoffen mit den Merkmalen des Patentanspruchs 1 gelöst.

### Die Erfindung und ihre Vorteile

Die erfindungsgemäße Vorrichtung zur kontinuierlichen Behandlung von Feststoffen in einem Wirbelschichtapparat mit den kennzeichnenden Merkmalen des Hauptanspruchs hat demgegenüber den Vorteil, dass in einem im Querschnitt runden Prozessraum eine in der Horizontalen gleichmäßig gerichtete Feststoffströmung über einen längeren Weg bei gleichzeitig flacher Wirbelschicht erreicht wird und der Prozessraum, der sich von dem Feststoffeintritt bis zu dem Feststoffaustritt erstreckt, in Kammern unterteilt ist, die untereinander Verbindung haben, wobei die Kammern durch Zwischenwände gebildet sind, die radial in den Prozessraum hineinragen und wobei die Zwischenwände als Wehre ausgebildet sind und eine Höhe der Wehre einstellbar ist, sodass ein Feststoffstrom diese Wehre je nach ihrer Höhe über die Oberkante und zwischen ihrer Unterkante und dem Anströmboden passieren kann. Dadurch können nunmehr auch in einem Prozessraum mit rundem Querschnitt mehrstufige Prozesse realisiert werden. Wenn diese Zwischenwände als Wehre ausgebildet sind, sind sie jeweils mit ihrer äußeren Längskante mit der Innenwandung des Prozessraumes und jeweils mit ihrer inneren Längskante mit der freien Längskante des Trennwand verbunden. Der Feststoffstrom passiert diese Wehre dann je nach Auslegung ihrer Höhe über ihre Oberkante oder zwischen ihrer Unterkante und dem Anströmboden. Im ersten Fall ist demzufolge ihre Höhe gleich oder kleiner der Höhe der Wirbelschicht, während im zweiten Fall ihre Höhe deutlich größer ist als die Höhe der Wirbelschicht. Durch Wehre lässt sich auch die Strömung des Feststoffstromes beeinflussen und vergleichmäßigen.

Dieser längere Weg, den die Feststoffteilchen von ihrem Eintritt in den Prozessraum bis zum Austritt aus diesem zurücklegen, wird durch eine von einer Trennwand unterbrochene, d. h. nicht ganz geschlossene Kreisringfläche gebildet. Durch die Anordnung des Ein- und Austritts beiderseits der Trennwand wird das zu behandelnde Gut gezwungen, diese Kreisringfläche zu passieren, d. h. bei möglichst geringem Raumbedarf wird die Distanz zwischen dem Feststoffeintritt und dem Feststoffaustritt maximiert. Damit werden die Vorteile einer Vorrichtung mit einer rechteckigen Apparategeometrie bezüglich einer flachen Wirbelschicht mit einer gleichmäßig gerichteten Feststoffströmung und eines engen Verweilzeitspektrums mit den baulichen Vorteilen hinsichtlich des Platzbedarfes, der geringeren Wandstärke und der leichteren druck- bzw. druckstoßfesten Konstruktion einer Vorrichtung mit einer runden Apparategeometrie verbunden. Durch die Verwendung vorzugsweise rotationssymmetrischer Bauteile ist eine einfachere Fertigung sowie eine leichtere Gewährleistung enger Fertigungstoleranzen möglich. Außerdem ist der Verzug bei Vorrichtungen mit runder Apparategeometrie geringer. Die runde Apparategeometrie ermöglicht auch eine genauere Einstellung der Strömungsgeometrie. Die räumliche Nähe von Feststoffein- und -austrag macht die Anbindung der Vorrichtung an Zu- und Abführeinrichtungen leichter. Günstiger gestaltet sich auch die Anbindung an Prozessfiltersysteme. Schließlich lassen sich Prozessräume mit rundem Querschnitt leichter reinigen als solche mit polygonem Querschnitt.

Unter dem Begriff "runde Apparategeometrie" sind nicht nur solche mit einer kreisförmigen Querschnittsform, sondern auch andere nicht eckige Querschnittsformen, wie z. B. ovale bzw. elliptische zu verstehen.

Die erfindungsgemäße Vorrichtung lässt sich leicht in herkömmliche Wirbelschichtapparate integrieren. Mit ihr lassen sich alle üblichen Wirbelschichtanwendungen, wie z. B. Adsorption, Desorption, Katalyse und Regeneration von Katalysatoren, Trocknung, Dehydrierung und Kalzination, durchführen.

Nach einer vorteilhaften Ausgestaltung der Erfindung ragt die Trennwand bis in den sich oberhalb des Prozessraumes anschließenden Entspannungsraum hinein. Dadurch wird vermieden, dass sich die in den Prozessraum eintretenden Feststoffe mit den bereits behandelten austretenden Feststoffen vermischen.

In einer anderen Ausgestaltung der Erfindung sind die Wehre deutlich höher als die Wirbelschicht und erstrecken sich bis unmittelbar auf den Anströmboden. Der Feststoff passiert die Wehre in diesem Fall über radiale Öffnungen (entweder zur Außenkante oder zur Innenkante oder zu beiden Kanten hin). Weiterhin sind als Durchtrittsöffnungen auch Bohrungen, Aussparungen oder andere beliebige Durchströmeinrichtungen möglich.

Nach einer besonders vorteilhaften Ausgestaltung der Erfindung ist die Höhe und/oder der Anstellwinkel der Trennwand einstellbar. Dadurch können in ein und derselben Vorrichtung schnell und auf einfache Weise unterschiedliche Prozessbedingungen eingestellt werden.

Nach einer anderweitigen vorteilhaften Ausgestaltung der Erfindung ist auf dem Anströmboden in der Achse des Prozessraumes ein Verdrängerkörper angeordnet, der mit der Trennwand verbunden ist. Dieser verschließt mit seiner Grundfläche die Gasdurchtrittsöffnungen des Anströmbodens, so dass zwischen seinem Außenmantel und der Innenfläche des Prozessraumes eine Ringfläche mit reduzierter Breite entsteht. Auf diese Weise kann ebenfalls Einfluss auf die Prozessbedingungen genommen werden. Außerdem dient der Außenmantel des Verdrängerkörpers der Befestigung anderer Einbauten, wie Wehren und Zwischenwänden.

Weitere Vorteile und vorteilhafte Ausgestaltungen der Erfindung sind der nachfolgenden Beschreibung, den Zeichnungen und den Ansprüchen entnehmbar.

### Zeichnung

Ausführungsbeispiele der Erfindung sind in den Zeichnungen dargestellt und im Folgenden näher beschrieben. In den Zeichnungen zeigen
- Fig. 1: eine Darstellung des Prinzips der Erfindung,
- Fig. 2: eine räumliche Darstellung der Innenansicht einer erfindungsgemäßen Vorrichtung mit Verdrängerkörper,
- Fig. 3: die Vorrichtung nach Fig. 2 mit einer Zwischenwand,
- Fig. 4: die Unterteilung des Prozessraumes in drei Kammern,
- Fig. 5: eine Prinzipdarstellung des Prozessraumes mit einem Überlaufwehr und
- Fig. 6: eine Prinzipdarstellung des Prozessraumes mit einem Unterlaufwehr.

### Beschreibung des Ausführungsbeispiels

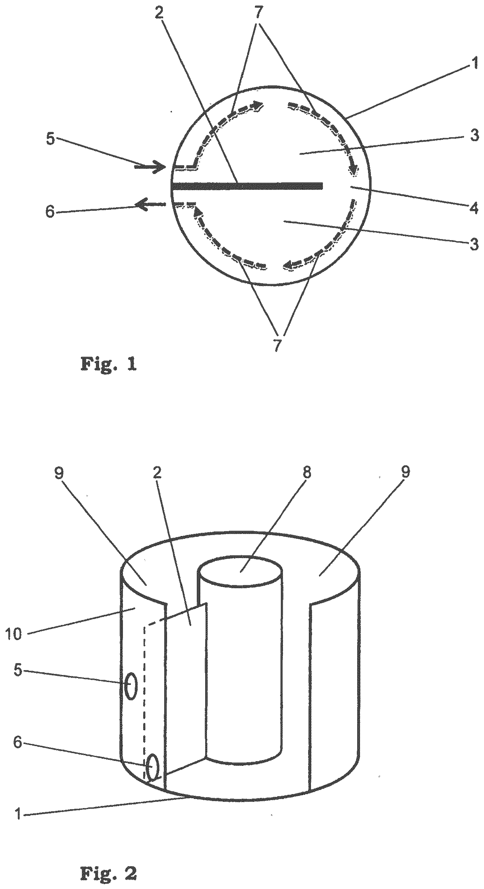

Fig. 1 zeigt das Prinzip einer nicht erfindungsgemäßen Vorrichtung, wobei hier lediglich der Umfang eines kreisförmigen Anströmbodens 1 mit einer senkrecht auf diesem stehenden Trennwand 2 dargestellt ist, die von seinem Umfang bis weit über die Mitte des Anströmbodens 1 ragt, so dass der Prozessraum 3 in zwei gleich große Bereiche geteilt ist, die an dem freien Ende der Trennwand 2 durch einen schmalen Bereich 4 miteinander verbunden sind. Der Eintritt des zu behandelnden Feststoffes in die Vorrichtung erfolgt über eine Eintragsöffnung, die in Fig. 1 mit einem auf den Anströmboden 1 hin zeigenden Pfeil 5 gekennzeichnet ist. Die Entnahme des behandelten Feststoffes aus der Vorrichtung erfolgt über eine Austragsöffnung, die hier durch einen von dem Anströmboden 1 weg zeigenden Pfeil 6 gekennzeichnet ist. Mit der Ziff. 7 wurde der Weg des Stromes bezeichnet, den der Feststoff zwischen Ein- und Austragsöffnung 5, 6 zurücklegt. Durch die Anordnung der Ein- und Austragsöffnung 5, 6 beiderseits der Trennwand 2 bewegt sich der Feststoff, während er in der Wirbelschicht gehalten wird, über den Anströmboden 1. Dieser Weg kann, wie aus Fig. 2 erkennbar, durch die Anordnung eines Verdrängerkörpers 8 in der Mittelachse des Prozessraumes als ein ringförmiger Prozessraum 9 ausgebildet sein, der sich zwischen der Außenwandung des Verdrängerkörpers 8 und der Wandung 10 der Vorrichtung erstreckt. Dadurch wird der Weg der in der Ausführung gem. Fig. 1 noch nahe der Mittelachse der Vorrichtung befindlichen und sich längs der Trennwand 2 bewegenden Feststoffteilchen nunmehr auch in eine Kreisbahn gezwungen, so dass sich das Verweilzeitspektrum einer so ausgebildeten Vorrichtung weiter einengt. Aus Fig. 2 ist ferner erkennbar, dass die Austragsöffnung 6 tiefer angeordnet ist als die Eintragsöffnung 5. Dadurch besteht zwischen Feststoffein- und -austrag ein natürliches Gefälle, wodurch sich die Entnahme des behandelten Feststoffes aus dem Apparat erleichtert.

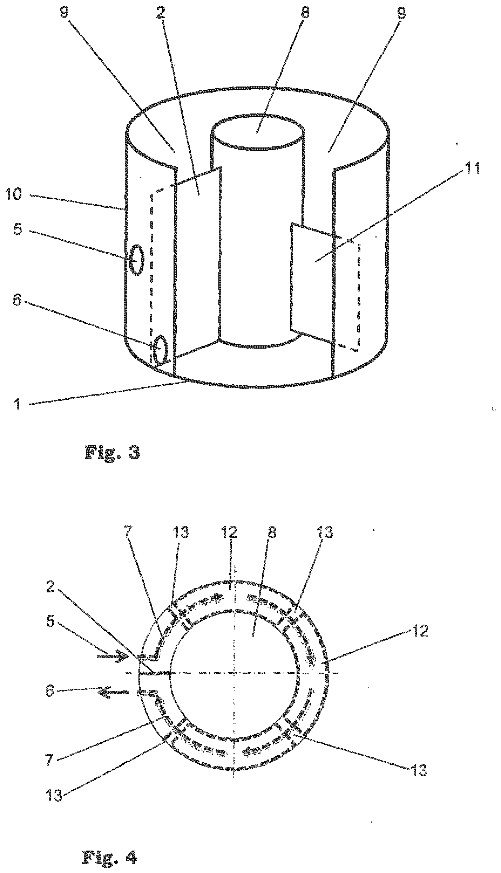

Fig. 3 zeigt die in Fig. 2 dargestellte Vorrichtung mit einem Wehr 11, das nach etwa zwei Dritteln des Weges von der Eintragsöffnung 5 zur Austragsöffnung 6 in dem Prozessraum 9 angeordnet und mit seinen senkrechten Kanten einerseits mit dem Verdrängerkörper 2 und anderseits mit der Wandung 10 verbunden ist. Die übrigen, mit der Darstellung in Fig. 2 übereinstimmenden Bestandteile der Vorrichtung wurden mit den gleichen Bezugszahlen versehen. Das Wehr 11 unterteilt den Prozessraum 9 in zwei Kammern unterschiedlicher Länge. Auf diese Weise wird Einfluss auf die Strömungsgeschwindigkeit des sich in der Wirbelschicht befindlichen Feststoffstromes genommen.

Wie oben bereits erläutert, lässt sich der ringförmige Prozessraum 9 mittels als Wehre ausgebildeter Zwischenwände in mehrere Kammern unterteilen, in denen der Feststoffstrom während des Passierens dieser Kammern in ein und derselben Wirbelschicht unterschiedlichen Behandlungen ausgesetzt bzw. mehreren Prozessschritten unterzogen werden kann. In Fig. 4 ist dies prinzipmäßig durch drei separate Kammern 12, die durch vier Wehre 13 in dem Bereich nach der Eintragsöffnung 5 bzw. vor der Austragsöffnung 6 des Feststoffes in dem Prozessraum angeordnet sind. So ist es beispielsweise möglich, den Feststoff in der ersten Kammer 12 zu mischen, in der nachfolgenden eine Agglomeration durchzuführen und in der letzten Kammer 12 den Prozess mit einer Trocknung abzuschließen. Zur Agglomeration sind in der zweiten Behandlungskammer 12 hier nicht dargestellte Düsen angeordnet, um ein Bindemittel kontinuierlich einzusprühen.

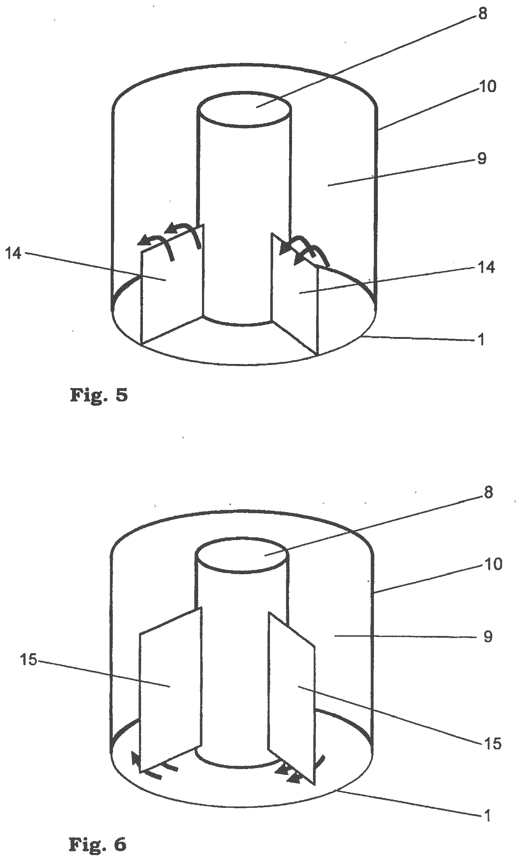

in den Fig. 5 und 6 sind zwei unterschiedliche Formen von Wehren dargestellt. Bei den in Fig. 5 gezeigten Wehren handelt es sich um Überlaufwehre 14, deren Höhe kleiner ist als die Höhe der Wirbelschicht, so dass sich der Feststoffstrom über die durch die Pfeile gekennzeichnete Oberkante der Überlaufwehre 14 bewegt. Im Unterschied dazu bewegt sich der Feststoffstrom bei den in Fig. 6 dargestellten Unterlaufwehren 15 durch den mit den Pfeilen gekennzeichneten Zwischenraum zwischen dem Anströmboden 1 und der Unterkante der Unterlaufwehre 15, deren Höhe in diesem Fall größer als die Höhe der Wirbelschicht bemessen ist.

Abschließend werden beispielhaft drei Verfahren beschrieben, die sich in der erfindungsgemäßen Vorrichtung durchführen lassen:

### 1. Kontinuierliche Agglomeration eines Pulvers:

In einen Wirbelschichtapparat mit einer Kreisringfläche von 5 dm² wird pulverförmige Lactose mit einer Dosiermenge von 5 kg/h kontinuierlich eingetragen. Im Wirbelschichtapparat findet die Fluidisierung bei einer Luftmenge von 150 m³/h und einer Lufteintrittstemperatur von 70 °C statt. Im Bereich des kreisringförmigen Prozessraumes 9 sind drei hier nicht näher dargestellte Zweistoff-Sprühdüsen angeordnet, die eine Binderflüssigkeit, bestehend aus PVP (2 %ige Lösung) von oben auf die Wirbelschicht aufsprühen. Dadurch agglomeriert das Pulver in ein rieselfähiges und leicht fließfähiges Produkt, welches kontinuierlich durch die Austragsöffnung 6 aus dem Prozessraum 9 entnommen wird.

### 2. Trocknung von Extrudaten:

Eine pharmazeutische Pulvermischung zur Herstellung von Tabletten wird unter Nutzung eines Bindemittels in einem Extruder granuliert. Das dabei entstandene feuchte Granulat wird mit einem Massenstrom von 10 kg/h kontinuierlich in einen Wirbelschichtapparat mit einer Anströmbodenfläche von 5 dm² eingetragen. In diesem Apparat wird eine Wirbelschicht durch einen Trocknungsvolumenstrom von 120 m³/h bei einer Lufteintrittstemperatur von 50 °C aufgebaut und das Granulat dadurch getrocknet. Das getrocknete Granulat wird an der Austragsöffnung 6 kontinuierlich entnommen.

### 3. Sprühgranulation von Maltodextrin

In einen Wirbelschichtapparat von 5 dm² Anströmfläche wird eine Maltodextrinlösung (30% Trockenstoffanteil) über 3 Zweistoffdüsen kontinuierlich mit einer Gesamtsprührate von 10 kg/h von unten in die Wirbelschicht eingesprüht. In der Wirbelschicht selbst wird durch einen Sprühgranulationsprozess ein kompaktes Granulat aufgebaut, in dem der Feststoffanteil aus der Sprühlösung sich auf den in der Wirbelschicht enthaltenen Partikeln abscheidet und der Wasseranteil verdampft. Der Prozess findet bei einer mittleren Temperatur in der Wirbelschicht von 60 °C statt. Die Prozessluftmenge beträgt 200 m³/h. Das entstandene Granulat wird kontinuierlich über einen seitlich am Produktaustrag montierten Zick-Zack-Sichter aus der Wirbelschicht ausgetragen. Im Sichter findet eine Klassierung statt, bei dem zu kleines Granulat durch einen Klassierluftstrom abgetrennt und in den Prozessraum zurückgeführt wird. Granulat mit ausreichender Größe wird als Produktstrom entnommen.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszahlenliste

- 1: Anströmboden
- 2: Trennwand
- 3: Prozessraum
- 4: Bereich
- 5: Eintragsöffnung
- 6: Austragsöffnung
- 7: Feststoffstrom
- 8: Verdrängerkörper
- 9: Ringförmiger Prozessraum
- 10: Wandung
- 11: Wehr
- 12: Kammer
- 13: Wehr
- 14: Überlaufwehr
- 15: Unterlaufwehr

## Patentansprüche

1. Vorrichtung zur kontinuierlichen Behandlung von Feststoffen in einem Wirbelschichtapparat mit rundem Prozessraum, der einen Feststoffeintritt (5) und einen Feststoffaustritt (6) aufweist, und einem der Innenkontur des Prozessraumes (3, 9) angepassten Anströmboden (1), unterhalb dessen ein Medieneintritt zur Erzeugung und Aufrechterhaltung einer Wirbelschicht angeordnet ist, wobei auf dem Anströmboden (1) eine Trennwand (2) angeordnet ist, die von der Innenwandung (10) des Prozessraumes (3, 9) radial nach innen in den Prozessraum (3, 9) hineinragt, und dass sich einerseits dicht der Trennwand (2) der Feststoffeintritt (5) und andererseits dicht der Trennwand (2) der Feststoffaustritt (6) befindet, wobei der Bereich des Prozessraumes (9), der sich von dem Feststoffeintritt (5) bis zu dem Feststoffaustritt (6) erstreckt, in Kammern (12) unterteilt ist, die untereinander in Verbindungen stehen und die Kammern (12) durch Zwischenwände gebildet sind, die radial in den Prozessraum (9) hineinragen, **dadurch gekennzeichnet, dass** die Zwischenwände als Wehre (11, 13, 14, 15) ausgebildet sind und eine Höhe der Wehre einstellbar ist, sodass ein Feststoffstrom diese Wehre (11, 13, 14, 15) je nach ihrer Höhe über ihre Oberkante und zwischen ihrer Unterkante und dem Anströmboden (1) passieren kann.

2. Vorrichtung nach Anspruch 1, **dadurch gekennzeichnet, dass** die Trennwand (2) bis in den sich oberhalb des Prozessraumes (3, 9) anschließenden Entspannungsraum hineinragt.

3. Vorrichtung nach einem der vorhergehenden Ansprüche, **dadurch gekennzeichnet, dass** die Höhe und/oder der Anstellwinkel der Trennwand (2) einstellbar ist.

4. Vorrichtung nach einem der vorhergehenden Ansprüche, **dadurch gekennzeichnet, dass** auf dem Anströmboden (1) in der Achse des Prozessraumes (9) ein Verdrängerkörper (8) angeordnet ist, der mit der Trennwand (2) verbunden ist.

5. Vorrichtung nach Anspruch 4, **dadurch gekennzeichnet, dass** einzelne oder alle Wehre (11, 13, 14, 15) mit dem Verdrängerkörper (2) verbunden sind.

## Claims

1. A device for the continuous treatment of solids in a fluidised bed apparatus with a round processing chamber, which has a solids inlet (5) and a solids outlet (6), and an inflow tray (1) adapted to fit the inner contour of the processing chamber (3, 9), beneath which a media inlet is arranged for creating and maintaining a fluidised bed, wherein a dividing wall (2) is arranged on the inflow tray (1), which dividing wall protrudes radially inwards from the inner wall (10) of the processing chamber (3, 9) into the processing chamber (3, 9), and in that on one side the solids inlet (5) is located close to the dividing wall (2) and on the other side the solids outlet (6) is located close to the dividing wall (2), wherein the region of the processing chamber (9) which extends from the solids inlet (5) to the solids outlet (6) is divided into chambers (12) which are connected to each other and the chambers (12) are formed by partition walls which protrude radially into the processing chamber (9), **characterised in that** the partition walls are formed as weirs (11, 13, 14, 15) and a height of the weirs is adjustable so that a flow of solids can pass through these weirs (11, 13, 14, 15) depending on their height above their upper edge and between their lower edge and the inflow tray (1).

2. Device according to claim 1, **characterised in that** the dividing wall (2) extends all the way into the expansion chamber which is adjoined above the processing chamber (3, 9).

3. Device according to one of the preceding claims, **characterised in that** the height and/or the angle of incidence of the dividing wall (2) is adjustable.

4. Device according to any one of the preceding claims, **characterised in that** a displacement body (8), which is connected to the dividing wall (2), is arranged on the inflow tray (1) in the axis of the processing chamber (9).

5. Device according to claim 4, **characterised in that** individual, or all weirs (11, 13, 14, 15) are connected to the displacement body (2).

## Revendications

1. Dispositif de traitement continu de matières solides dans un appareil à lit fluidisé avec une chambre de traitement ronde, qui présente une entrée de matière solide (5) et une sortie de matière solide (6), et un fond d'admission (1) adapté au contour intérieur de la chambre de traitement (3, 9), sous lequel une entrée de milieux est disposée pour la génération et le maintien d'un lit fluidisé, dans lequel est disposée sur le fond d'admission (1) une cloison de séparation (2), qui dépasse de la paroi intérieure (10) de la chambre de traitement (3, 9) radialement vers l'intérieur dans la chambre de traitement (3, 9), et que d'une part l'entrée de matière solide (5) se trouve d'une part à proximité étroite de la cloison de séparation (2) et d'autre part la sortie de matière solide (6) se trouve à proximité étroite de la cloison de séparation (2), dans lequel la zone de la chambre de traitement (9), qui s'étend depuis l'entrée de matière solide (5) jusqu'à la sortie de matière solide (6), est divisée en compartiments (12), qui sont reliés les uns aux autres et les compartiments (12) sont formés par des cloisons intermédiaires, qui dépassent radialement dans la chambre de traitement (9), **caractérisé en ce que** les cloisons intermédiaires sont réalisées en tant que barrage (11, 13, 14, 15) et une hauteur du barrage peut être réglée si bien qu'un flux de matière solide peut traverser ledit barrage (11, 13, 14, 15) selon sa hauteur en passant par son arête supérieure et entre son arête inférieure et le fond d'admission (1).

2. Dispositif selon la revendication 1, **caractérisé en ce que** la cloison de séparation (2) dépasse jusque dans la chambre de détente située dans le prolongement au-dessus de la chambre de traitement (3, 9).

3. Dispositif selon l'une quelconque des revendications précédentes, **caractérisé en ce que** la hauteur et/ou l'angle d'incidence de la cloison de séparation (2) peuvent être réglés.

4. Dispositif selon l'une quelconque des revendications précédentes, **caractérisé en ce qu'**est disposé sur le fond d'admission (1) dans l'axe de la chambre de traitement (9) un corps de refoulement (8), qui est relié à la cloison de séparation (2).

5. Dispositif selon la revendication 4, **caractérisé en ce que** certains ou tous les barrages (11, 13, 14, 15) sont reliés au corps de refoulement (2).
